# EUROPEAN PATENT SPECIFICATION

(11) **EP 3 465 986 B1**
(45) Date of publication and mention of the grant of the patent: **15.07.2020**
(21) Application number: 17733520.5
(22) Date of filing: 24.05.2017
(51) Int. Cl.: H04L 12/26, H04L 29/12

(54) **METHOD AND SYSTEM FOR AUGMENTING NETWORK TRAFFIC FLOW REPORTS**
VERFAHREN UND SYSTEM ZUR ERWEITERUNG VON NETZWERKVERKEHRSFLUSSBERICHTEN
PROCÉDÉ ET SYSTÈME D'AUGMENTATION DE RAPPORTS DE FLUX DE TRAFIC DE RÉSEAU

(30) Priority: 06.06.2016 US 201662346170 P
(43) Date of publication of application: 10.04.2019
(73) Proprietor: Avast Software s.r.o., 14000 Praha 4 (CZ)
(72) Inventor: MIRONCHYK, Pavel, 3452 LL Vleuten (NL)
(74) Representative: Abel & Imray
(86) International application number: PCT/IB2017/000733
(87) International publication number: WO 2017/212331

(56) References cited:
- US-A1- 2012 084 382
- US-A1- 2013 290 563
- US-A1- 2015 304 199
- US-B1- 8 819 227

## Description

### CROSS-REFERENCE TO RELATED PROVISIONAL APPLICATION

This application claims the benefit of U.S. Provisional Patent Application No. 62/346,170, filed on June 6, 2016.

### FIELD OF THE INVENTION

The present invention is directed to embodiments of a new process for augmenting network traffic flow reports with domain name information.

### BACKGROUND OF THE INVENTION

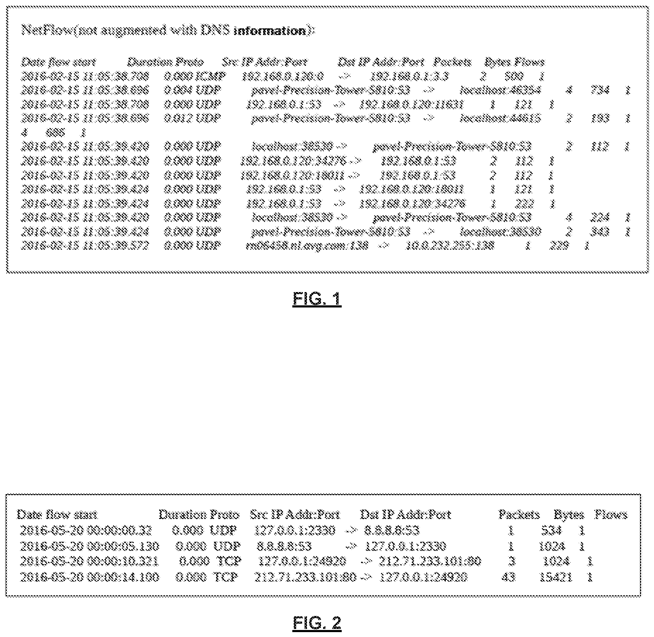

Computing machines, such as gateway and/or network equipment (e.g., routers), are typically configured to export network flow reports. These reports include information regarding incoming/outgoing network traffic (i.e., Internet Protocol ("IP") addresses) as it enters or exits the machine(s), and generally provide an overview of IP endpoints, as well as data rates (whether internal or external in relation to the local network) and the amount of data sent and received. The two most popular standards for network flow reports are Cisco NetFlow and IPFIX. FIGS. 1 and 2 are examples of these types of reports.

Enterprises, such as antivirus (AV) software providers, often utilize the reports to analyze and optimize bandwidth structure (e.g., user bandwidth usage patterns), conduct system issue investigations, and perform security assessments and/or identify anomalies. When assessing machine or network security, for example, these reports are usually used to detect intrusion attempts and infected hardware/software on a local network (e.g., for malicious agents, such as malware or viruses). Malware / command and control (C&C) host signatures databases or complex behavioral / machine learning analysis techniques can also be used to help identify these issues.

However, conventional reports (which are usually based on Internet Protocol version 4 [IPv4] and/or 6 [IPv6]) are generally unreliable for bandwidth optimization or security assessments, insofar as IP address to Domain Name System (DNS) resolution is concerned; these reports only indicate the destination IP addresses (consisting only of numbers and dots), where it is rather more useful to know the actual domain name(s) (e.g., www.avg.com) that users intended to access. The fact that user DNS queries and the actual connections that are subsequently made are not "linked" to one another, also complicates matters.

Reverse DNS querying is one existing approach to address this issue. But because DNS is dynamic and changes frequently (and also since DNS implements an aliasing technique, i.e., CNAME), this approach often fails to reveal all the domain names corresponding to reported IP addresses. For example, two consecutive requests for the same address may result in two different responses (i.e., due to load balancing); moreover, changes occur frequently without notice.

As an example, a NetFlow report on traffic from a desktop computer might include the following line item: *2016-02-26 32:15:32.434 1.030 TCP 192.168.0.1:42343* -> *10.0.226.24:80 X XXXXXX.* This line indicates outgoing traffic to a server having the IP address "10.0.226.24". Reverse DNS querying this address might reveal the domain name "apps-build-prod-idc-ams001.mgm.avg.com". However, an error message might appear if a web browser application is directed to access this domain. This could occur if the server actually serves two virtual hosts that are accessible under different domain names (e.g., jenkins.avg-labs.com and sonar.avg-labs.com) both pointing to "apps-build-prod-idc-ams001.mgm.avg.com" (note that DNS system allows referencing domain to domain). Thus, depending on which domain name is inputted to the web browser application, a different web application might be served from the same destination server machine.

As another example, as depicted in the NetFlow report of FIG. 2, host "127.0.0.1" requested access to host address "212.71.233.101" (via a HTTP connection at port 80). Conventionally, an analyst (or perhaps an automated system) might confirm whether this is an HTTP request to a particular website by:
a) accessing the website via the uniform resource locator (URL) "http://212.71.233.101/" and viewing its content;
b) conducting a reverse DNS query (PTR) to attempt to retrieve the DNS name associated with "212.71.233.101"; and
c) confirm the DNS name in categorized directories of websites from third-party providers.
In this example, two domain names might result: "evproc.com" and "li646-101.members.linode.com". This is because the address "212.71.233.101" is used by a remote server for two different web applications - one for serving evproc.com (normal software) and another for serving hedgestash.com (harmful/phishing software). Depending on the DNS name used in the original request (for which traffic has been captured in the network flow report), the server will serve different web applications; it might, for example, serve evproc.com by default. If the original user web request was to access "hedgestash.com", however, it would be difficult to determine this merely from conventional network flow reports. Existing network flow algorithms simply do not capture important parameters of connections (e.g., DNS name of host) for popular protocols, such as Hypertext Transfer Protocol (HTTP), Hypertext Transfer Protocol Secure (HTTPS), Simple Mail Transfer Protocol (SMTP), and the like. In fact, as described above, DNS is dynamic in nature. Thus, hedgestash.com may have existed only for a short time, after which it may disappear with little to no trace.

It would thus be beneficial to identify, for one or more line items in a network flow report, the original or actual DNS name used to access the destination resource(s)/server(s). This can be referred to as a "mapping" of DNS queries (made "at the moment of the request") to network flows.

US2013/290563 discusses systems, methods, and apparatus for forward and reverse DNS translation of IPv6 IP addresses. For a PTR request where the authoritative DNS server does not have a domain name associated with the IP address in the request, a DNS answer augmentation system can generate an IP address on the fly using one or more algorithms that take information about the request as an input. Similarly, for an AAAA request where the authoritative DNS server does not have an IP address associated with the domain name in the request, the DNS answer augmentation system can generate a domain name on-the-fly using one or more algorithms that take information about the request as an input. The DNS answer augmentation system can reside between a client or a DNS server and an authoritative DNS server or be a part of the authoritative DNS server.

US2015304199 discusses a method and system for categorizing Internet Protocol (IP) based network traffic which is configured to monitor domain name system (DNS) transactions between at least one customer device and a DNS service. The DNS transactions are used to populate a data table, which is used to enrich a data record (e.g., IPDR). In particular, an IP address and/or customer ID in the data record is used to look up the corresponding domain name in the data table, which is added to the data record. The enriched data record is used to categorize the IP traffic

### SUMMARY OF THE INVENTION

Generally speaking, it is an object of the present invention to enhance the operation of security applications and/or the analysis of network traffic flow reports during security assessments, by augmenting the reports with DNS information. In a first aspect of the invention there is provided a method for augmenting a network traffic flow data report with domain name service, DNS, information having the features of claim 1, below. In a second aspect of the invention there is provided a networking device configured to augment a network traffic flow data report with domain name service, DNS, information having the features of claim 6, below. In a third aspect of the invention there is provided a non-transitory computer readable medium for augmenting network traffic flow data with domain name service, DNS, information, having the features of claim 11, below. Optional but preferred features are set out in the dependent claims.

According to an exemplary embodiment of the present invention, a method for augmenting network traffic flow data with domain name service ("DNS") information is provided. The method involves a networking device having at least one data processor, and includes monitoring DNS response traffic through a network, extracting at least one domain name record from the response traffic that corresponds to at least one domain name submitted in at least one web request, and providing the at least one domain name record for inclusion in the network traffic flow data.

Still other objects and advantages of the present invention will in part be obvious and will in part be apparent from the specification, and the scope of the invention will be indicated in the claims.

The present invention accordingly comprises the features of construction, combinations of elements, and arrangement of parts, and the various steps and the relation of one or more of such steps with respect to each of the others, all as exemplified in the constructions herein set forth, and the scope of the invention will be indicated in the claims.

### BRIEF DESCRIPTION OF THE DRAWINGS

The inventive embodiments are described in greater detail hereinafter with reference to the accompanying drawing figures, in which:
FIGS. 1 and 2 are examples of network traffic flow reports according to the prior art;
FIGS. 3A and 3B are flowcharts showing exemplary processes for augmenting one or more network traffic flow reports in accordance with embodiments of the present invention;
FIG. 4 is a schematic diagram showing a DNS cache in accordance with embodiments of the present invention;
FIG. 5 is a flowchart showing an exemplary process for DNS caching in accordance with embodiments of the present invention;
FIG. 6 is a flowchart showing another exemplary process for augmenting a network flow report with DNS name information in accordance with embodiments of the present invention; and
FIG. 7 is an example of a network traffic flow report augmented according to one or more of the processes shown in FIGS. 3A, 3B, 5, and 6.

### DETAILED DESCRIPTION OF THE PREFERRED EMBODIMENTS

According to embodiments of the present invention, a system can augment network traffic flow reports (e.g., NetFlow or IPFIX reports) with original DNS queries information or context that are determined in real-time (e.g., as IPv4 and/or IPv6 connections occur), particularly when those queries/connection requests are made.

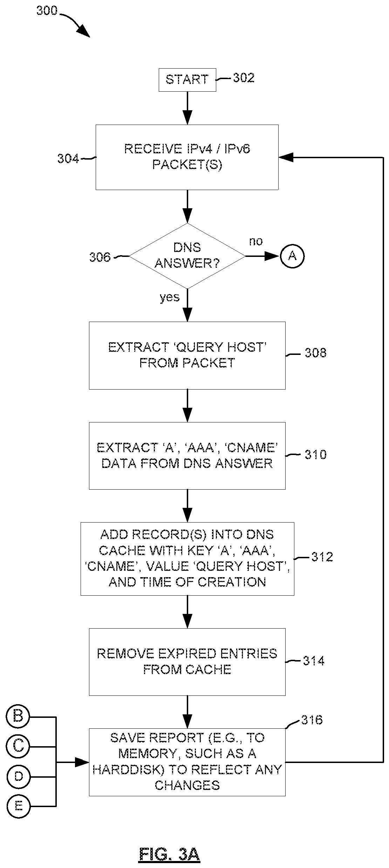

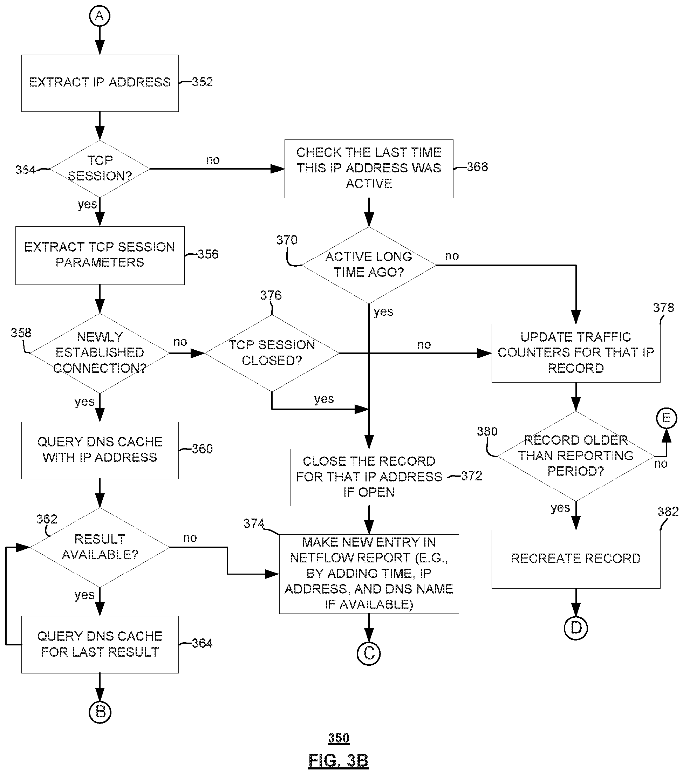

FIGS. 3A and 3B show exemplary processes 300 and 350 that can be implemented by the system to augment one or more network traffic flow reports in accordance with embodiments of the present invention. Referring to FIG. 3A, process 300 can begin at step 302 - for example, by entering a "promiscuous" mode. One or more IPv4 and/or IPv6 packets can be received (step 304), and a determination can be made as to whether the received packet includes a DNS reply or answer (step 306) - for example, by classifying information in the packet to identify the presence of a DNS answer. If the received packet includes a DNS answer, the process can include extracting the 'QUERY HOST' value from the packet (step 308), extracting the keys 'A', 'AAA', and 'CNAME' from the DNS answer (step 310), and adding record(s) into one or more DNS caches with one or more of the following: keys 'A', 'AAA', and 'CNAME', the value 'QUERY HOST', and time of creation (step 312). Step 312 preferably includes ensuring that the newly added record(s) are given higher priority over other name or domain name collisions. Process 300 can further include removing expired entries from the DNS cache(s) (step 314) and saving one or more reports (e.g., network traffic flow reports or data) to memory (e.g., a hard disk or the like) to reflect any changes (step 316). Returning to step 306, if the received packet does not include a DNS answer, but is rather any other type of TCP and/or UDP packet, then the process can proceed to *A* and enter into the flow for process 350 (FIG. 3B).

Process 350 can include extracting the IP address(es) from the packet (step 352) and analyzing the contents in the packet to determine if the packet corresponds to a TCP session (step 354). If the packet is for a TCP session, process 350 can include extracting the TCP session parameters (step 356) and determining whether the session is for a newly established connection (step 358). If the session is for a newly established connection, process 350 can include querying the DNS cache(s) with the extracted IP address (step 360). If a result to the query is available (step 362), process 350 can include querying the DNS cache(s) for the result (step 364), and proceeding to *B* to return to step 316 of process 300. In some embodiments, querying of the DNS cache for result(s) can be repeated, e.g., until the last result is retrieved. If there is no result available at step 362, process 350 can include creating a new entry in one or more network traffic flow reports or data (step 374) - for example, by adding time information, the IP address, and DNS name if available - and proceeding to C to return to step 316 of process 300.

Returning to step 354, if the packet is not for a TCP session, process 350 can include determining or checking the last time the IP address was active (step 368). If the last time the IP address was active a relatively long time ago (at step 370), process 350 can include closing the record for that IP address if it is open (step 372), proceeding to step 374, and continuing on the process therefrom as shown. On the other hand, if the last time the IP address was active was relatively recently (at step 370), process 350 can include updating traffic counters for that IP record (step 378) and determining whether the time of the record is older than a reporting period (step 380). If the time of the record is older than the reporting period, process 350 can include recreating the record (step 382) and proceeding to *D* to return to step 316 of process 300. If the time of the record is not older than the reporting period, process 350 can proceed to E to return directly to step 316 of process 300.

Returning to step 358, if the session is not for a newly established connection, process 350 can include determining whether the TCP session is closed (step 376). If the TCP session is closed, process 350 can proceed to step 372; otherwise, the process can proceed to step 378.

According to various embodiments, the system can be implemented as an algorithm, and more specifically, as an extension to network flow capture software (e.g., NetFlow). The algorithm can (i) enable inspection of DNS answer traffic [e.g., more deeply or concentrated than other data], (ii) push answer information into prioritized cache, (iii) mine or "travel" the cache in reverse order to recover original DNS name information used at or about the time of the requests, and (iv) add the recovered original DNS name information to the network flow report.

An example of a traffic line item from a network flow report augmented with original DNS name information is as follows: *2016-02-26 32:15:32.434 1.030 TCP 192.168.0.1:42343 -> 10.0.226.24 (jenkins.avg-labs.com) :80 X XXXXX X.* An example of the prioritized DNS cache contents is as follows:
1. jenkins.avg-labs.com : apps-build-prod-idc-ams001.mgm.avg.com.
2. apps-build-prod-idc-ams001.mgm.avg.com : 10.0.226.24.

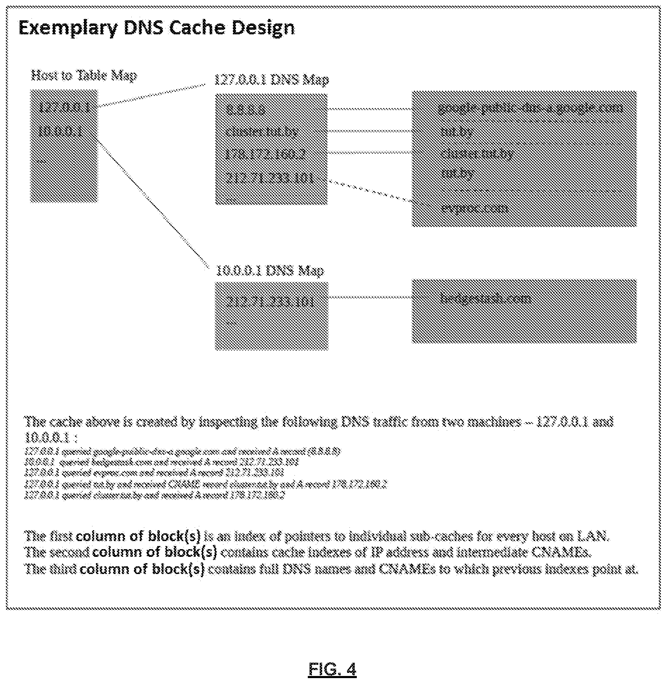

FIG. 4 is a schematic diagram showing an exemplary DNS cache and contents therein.

According to an exemplary embodiment, the system can generate network traffic flows and link connections (e.g., HTTP connections) revealed by the flows to relevant DNS names at or about the time the connections were made. In certain embodiments, the system can be implemented as a special DNS module that extends an existing flow capturing software application. The module can, for example, be configured to:
1. Capture all incoming DNS traffic;
2. Extract original web requests and A, AAA, and CNAME records from DNS replies;
3. Organize such data into one or more special caches; and
4. Provide an interface to capture flow software such that the software can quickly recover the appropriate DNS name used in the requested connection.

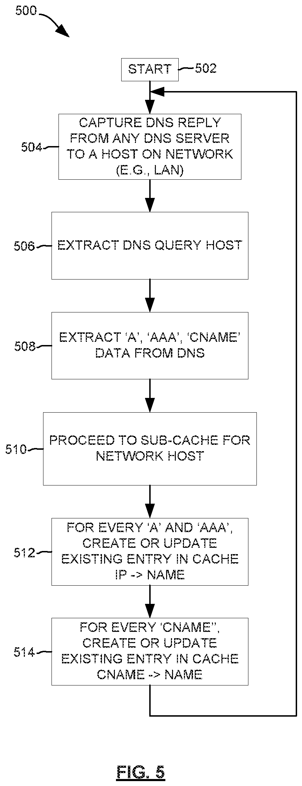

FIG. 5 is a flowchart showing an exemplary process 500 for DNS caching in accordance with embodiments of the present invention. Beginning at step 502, the process can include capturing DNS answer information transmitted from a DNS server to a host on a network (e.g., LAN) (step 504), extracting 'QUERY HOST' from the DNS answer (step 506), and extracting 'A', 'AAA', and 'CNAME' data from the answer (step 508). Process 500 can also include proceeding to a sub-cache for the network host (step 510), and for each extracted 'A' and 'AAA', creating or updating the existing entries in cache IP -> NAME (step 512), and for each extracted 'CNAME', creating or updating the existing entry in cache CNAME -> NAME (step 514). After step 514, process 500 can return to step 504 to repeat the process.

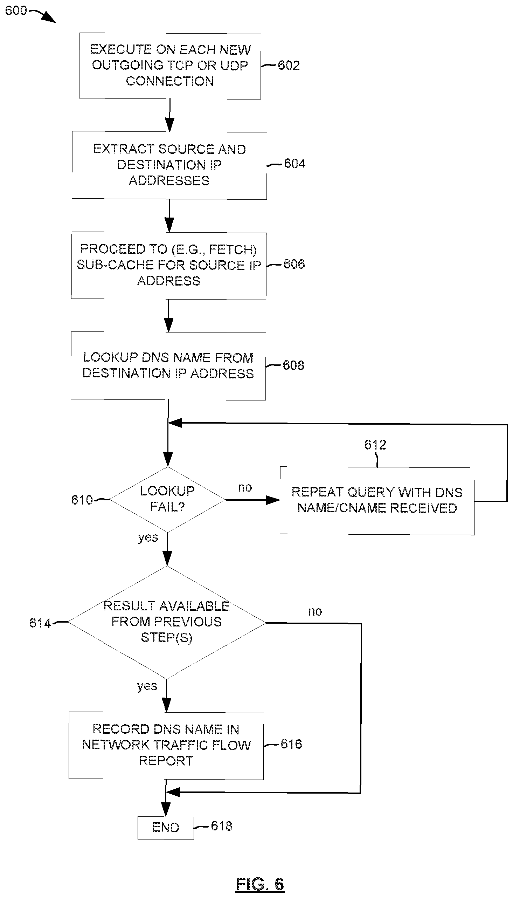

FIG. 6 is a flowchart showing another exemplary process 600 for augmenting a network traffic flow report with DNS information in accordance with embodiments of the present invention. Process 600 can be an extension to a network traffic flow report generation system or algorithm, and can be executed on each new outgoing TCP or UDP connection (step 602). The process can include extracting source and destination IP addresses (step 604), proceeding to (e.g., fetching) sub-cache for the source IP address (step 606), and looking up the DNS name from the destination IP address (step 608). If the lookup fails at step 610, process 600 can include determining if a lookup result is available from any of the previous steps (step 614). If a result is available, process 600 can include recording the DNS name in one or more network traffic flow reports or data (step 616) and ending at step 618. If a result is not available, process 600 can end at step 618. Returning to step 610, if the lookup is successful, process 600 can include repeating querying (e.g., in a recursive manner) with the received DNS name/CNAME (step 612). This recursive loop between steps 610 and 612 can emulate backward recursive resolving, and can be utilized to extract the highest-level name for the IP (rather than merely an intermediate CNAME).

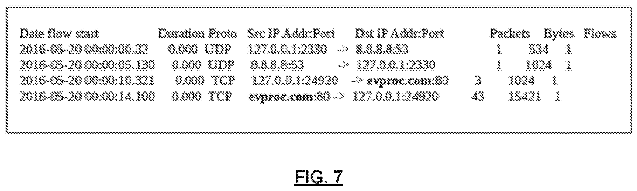

An example of a network flow report (e.g., augmented according to one or more of the processes shown in FIGS. 3A, 3B, 5, and 6) is shown in FIG. 7.

It should be understood that the steps shown in processes 300, 350, 500, and 600 are merely illustrative and that existing steps may be modified or omitted, additional steps may be added, and the order of certain steps may be altered.

Accordingly, embodiments of the present invention advantageously provide network flows that include the original requested DNS names for some or all of the reported connection requests. This enables network analysis personnel, automation tools, or the like to optimize network bandwidth (e.g., for individual users) and identify network security issues. It is to be appreciated that, in certain embodiments, the augmented network flow reports can be useful for detecting malicious programs, such as unauthorized smartphone apps. The novel system described herein, including the supplementation of network flows with DNS names from cache, can overcome the disadvantages of existing DNS caching solutions, which do not effect grouping by individual hosts.

It should be understood that the foregoing subject matter may be embodied as devices, systems, methods and/or computer program products. Accordingly, some or all of the subject matter may be embodied in hardware and/or in software (including firmware, resident software, micro-code, state machines, gate arrays, etc.). Moreover, the subject matter may take the form of a computer program product on a computer-usable or computer-readable storage medium having computer-usable or computer-readable program code embodied in the medium for use by or in connection with an instruction execution system. A computer-usable or computer-readable medium may be any medium that can contain, store, communicate, propagate or transport the program for use by or in connection with the instruction execution system, apparatus, or device.

The computer-usable or computer-readable medium may be for example, an electronic, magnetic, optical, electromagnetic, infrared, or semiconductor system, apparatus, device, or propagation medium. Computer-readable media may comprise computer storage media and communication media.

Computer storage media includes volatile and nonvolatile, removable and non-removable media implemented in any method or technology for storage of information such as computer-readable instructions, data structures, program modules or other data. Computer storage media includes RAM, ROM, EEPROM, flash memory or other memory technology that can be used to store information and that can be accessed by an instruction execution system.

Communication media typically embodies computer-readable instructions, data structures, program modules or other data in a modulated data signal such as a carrier wave or other transport mechanism and includes any information delivery media (wired or wireless). A modulated data signal can be defined as a signal that has one or more of its characteristics set or changed in such a manner as to encode information in the signal.

When the subject matter is embodied in the general context of computer-executable instructions, the embodiment may comprise program modules, executed by one or more systems, computers, or other devices. Generally, program modules include routines, programs, objects, components, data structures and the like, which perform particular tasks or implement particular abstract data types. Typically, the functionality of the program modules may be combined or distributed as desired in various embodiments.

Those of ordinary skill in the art will understand that the term "Internet" used herein refers to a collection of computer networks (public and/or private) that are linked together by a set of standard protocols (such as TCP/IP and HTTP) to form a global, distributed network. While this term is intended to refer to what is now commonly known as the Internet, it is also intended to encompass variations that may be made in the future, including changes and additions to existing protocols.

It is also to be understood that the following claims are intended to cover all of the generic and specific features of the invention herein described, and all statements of the scope of the invention, which, as a matter of language, might be said to fall therebetween.

## Claims

1. A method (300, 500) for augmenting a network traffic flow report with domain name service, DNS, information, involving a networking device having at least one data processor, the method **characterized in that**:
in response to a query associated with a web content request, receiving, by the at least one data processor, a DNS response through a network, wherein the query is generated when the web content is requested;
extracting (310, 508), by the at least one data processor and from the DNS response, at least one domain name and a key that corresponds to the web content request;
storing (312, 512), by the at least one data processor, a DNS record including the domain name and the key in a DNS cache memory ; and
including (316), by the at least one data processor, the DNS record in the network traffic flow report.

2. The method of claim 1, wherein the DNS cache memory includes prioritized cache memory, and wherein the DNS record stored in the DNS cache memory is given priority over other conflicting DNS information stored in the DNS cache memory.

3. The method of claim 1, wherein the key includes at least one of an 'A', an 'AAA', or a canonical name, CNAME, record.

4. The method of claim 1, further comprising:
extracting at least one Internet protocol, IP, address corresponding to the at least one DNS record from one or more data packets associated with the DNS response.

5. The method of claim 1, wherein the receiving, extracting, and adding are implemented as an extension to a network traffic flow capture system.

6. A networking device configured to augment a network traffic flow report with domain name service, DNS, information, **characterized by**:
a communications interface configured to route data to and from at least one client device; and
at least one data processor configured to:
in response to a query associated with a web content request, receive a DNS response through a network, wherein the query is generated when the web content is requested;
extract (310, 508) at least one domain name and a key from the DNS response that corresponds to the web content request;
storing (312, 512), by the at least one data processor, a DNS record including the domain name and the key in a DNS cache memory; and
including (316) the DNS record in the network traffic flow report.

7. The networking device of claim 6, wherein the DNS cache memory includes prioritized cache memory, and wherein the DNS record stored in the DNS cache memory is given priority over other conflicting DNS information stored in the DNS cache memory.

8. The networking device of claim 6, wherein the key includes at least one of an 'A', an 'AAA', or a canonical name, CNAME, record.

9. The networking device of claim 6, wherein the at least one data processor is configured to extract at least one Internet protocol, IP, address corresponding to the DNS record from one or more data packets associated with the DNS response.

10. The networking device of claim 6, wherein the at least one data processor is further configured to perform the receiving, the extracting, and the storing as an extension to a network traffic flow capture system.

11. A non-transitory computer readable medium for augmenting network traffic flow data with domain name service, DNS, information, the computer readable medium **characterized by** instructions that, when executed by at least one data processor of a networking device, cause the at least one data processor to:
in response to a query associated with a web content request, receive a DNS response through a network, wherein the query is generated when the web content is requested;
extract (310, 508) at least one domain name and a key from the DNS response that corresponds to the web content request;
storing (312, 512)a DNS record including the domain name and the key in a DNS cache memory; and
include (316) the DNS record in the network traffic flow report.

12. The computer readable medium of claim 11, wherein the DNS cache memory includes prioritized cache memory, and wherein the DNS record stored in the DNS cache memory is given priority over other conflicting DNS information stored in the DNS cache memory.

13. The computer readable medium of claim 11, wherein the key includes at least one of an 'A', an 'AAA', or a canonical name, CNAME, record.

14. The computer readable medium of claim 11, wherein the DNS response is directed to a client device from which the web content request is submitted.

15. The computer readable medium of claim 11, wherein the computer readable medium is **characterized by** instructions that, when executed by at least one data processor of the networking device, cause the at least one data processor to:
extract at least one Internet protocol, IP, address corresponding to the DNS record from one or more data packets associated with the DNS response.

## Patentansprüche

1. Verfahren (300, 500) zum Ergänzen eines Netzwerkverkehrsflussberichts mit Domänennamendienst-, DNS-, Information unter Einbeziehung einer Netzwerkvorrichtung mit mindestens einem Datenprozessor, **gekennzeichnet durch**:
als Antwort auf eine Anfrage in Zusammenhang mit einer Webinhaltsanforderung, Empfangen einer DNS-Antwort über ein Netzwerk durch den mindestens einen Datenprozessor, wobei die Anfrage erzeugt wird, wenn der Webinhalt angefordert wird;
Extrahieren (310, 508) mindestens eines Domänennamens und eines Schlüssels, der der Webinhaltsanforderung entspricht, durch den mindestens einen Datenprozessor und aus der DNS-Antwort;
Speichern (312, 512) einer DNS-Aufzeichnung mit dem Domänennamen und dem Schlüssel in einem DNS-Cache-Speicher durch den mindestens einen Datenprozessor; und
Aufnehmen (316) der DNS-Aufzeichnung in den Netzwerkverkehrsflussbericht durch den mindestens einen Datenprozessor.

2. Verfahren nach Anspruch 1, bei dem der DNS-Cache-Speicher einen priorisierten Cache-Speicher aufweist und die in dem DNS-Cache-Speicher gespeicherte DNS-Aufzeichnung gegenüber anderer, widersprüchlicher DNS-Information, die in dem DNS-Cache-Speicher gespeichert ist, priorisiert wird.

3. Verfahren nach Anspruch 1, bei dem der Schlüssel mindestens eine "A"-, eine "AAA"- oder eine Kanonischer-Name-, CNAME-, Aufzeichnung aufweist.

4. Verfahren nach Anspruch 1, ferner mit:
Extrahieren mindestens einer Internetprotokoll-, IP-, Adresse, die der mindestens einen DNS-Aufzeichnung entspricht, aus einem oder mehreren Datenpaketen, die der DNS-Antwort zugeordnet sind.

5. Verfahren nach Anspruch 1, bei dem das Empfangen, Extrahieren und Hinzufügen als Erweiterung eines Netzwerkverkehrsflusserfassungssystems implementiert werden.

6. Netzwerkvorrichtung, die zum Ergänzen eines Netzwerkverkehrsflussberichts mit Domänennamendienst-, DNS-, Information ausgebildet ist, **gekennzeichnet durch**:
eine Kommunikationsschnittstelle, die zum Weiterleiten von Daten zu und von mindestens einer Client-Vorrichtung ausgebildet ist; und
mindestens einem Datenprozessor, der ausgebildet ist zum:
als Antwort auf eine Anfrage in Zusammenhang mit einer Webinhaltsanforderung, Empfangen einer DNS-Antwort über ein Netzwerk, wobei die Anfrage erzeugt wird, wenn der Webinhalt angefordert wird;
Extrahieren (310, 508) mindestens eines Domänennamens und eines Schlüssels aus der DNS-Antwort, die der Webinhaltsanforderung entspricht;
Speichern (312, 512) einer DNS-Aufzeichnung mit dem Domänennamen und dem Schlüssel in einem DNS-Cache-Speicher durch den mindestens einen Datenprozessor; und
Aufnehmen (316) der DNS-Aufzeichnung in den Netzwerkverkehrsflussbericht.

7. Netzwerkvorrichtung nach Anspruch 6, bei der der DNS-Cache-Speicher einen priorsierten Cache-Speicher aufweist und die in dem DNS-Cache-Speicher gespeicherte DNS-Aufzeichnung gegenüber anderer, widersprüchlicher DNS-Information, die in dem DNS-Cache-Speicher gespeichert ist, priorisiert wird.

8. Netzwerkvorrichtung nach Anspruch 6, bei der der Schlüssel mindestens eine "A"-, eine "AAA"- oder eine Kanonischer-Name-, CNAME-, Aufzeichnung aufweist.

9. Netzwerkvorrichtung nach Anspruch 6, bei der der mindestens eine Datenprozessor zum Extrahieren mindestens einer Internetprotokoll-, IP-, Adresse, die der DNS-Aufzeichnung entspricht, aus einem oder mehreren Datenpaketen, die der DNS-Antwort zugeordnet sind, ausgebildet ist.

10. Netzwerkvorrichtung nach Anspruch 6, bei der der mindestens eine Datenprozessor ferner ausgebildet ist zum Durchführen des Empfangens, des Extrahierens und des Speicherns als eine Erweiterung eines Netzwerkverkehrsflusserfassungssystems.

11. Nichtflüchtiges computerlesbares Medium zum Ergänzen von Netzwerkverkehrsflussdaten mit Domänennamendienst-, DNS-, Information, wobei das computerlesbare Medium durch Anweisungen gekennzeichnet ist, die bei einer Ausführung durch mindestens einen Datenprozessor einer Netzwerkvorrichtung bewirken, dass der mindestens eine Datenprozessor Folgendes ausführt:
als Antwort auf eine Anfrage in Zusammenhang mit einer Webinhaltsanforderung, Empfangen einer DNS-Antwort über ein Netzwerk, wobei die Anfrage erzeugt wird, wenn der Webinhalt angefordert wird;
Extrahieren (310, 508) mindestens eines Domänennamens und eines Schlüssels aus der DNS-Antwort, die der Webinhaltsanforderung entspricht;
Speichern (312, 512) einer DNS-Aufzeichnung mit dem Domänennamen und dem Schlüssel in einem DNS-Cache-Speicher; und
Aufnehmen (316) der DNS-Aufzeichnung in den Netzwerkverkehrsflussbericht.

12. Computerlesbares Medium nach Anspruch 11, bei dem der DNS-Cache-Speicher einen priorisierten Cache-Speicher aufweist und die in dem DNS-Cache-Speicher gespeicherte DNS-Aufzeichnung gegenüber anderer, widersprüchlicher DNS-Information, die in dem DNS-Cache-Speicher gespeichert ist, priorisiert wird.

13. Computerlesbares Medium nach Anspruch 11, bei dem der Schlüssel mindestens eine "A"-, eine "AAA"- oder eine Kanonischer-Name-, CNAME-, Aufzeichnung aufweist.

14. Computerlesbares Medium nach Anspruch 11, bei dem die DNS-Antwort zu einer Client-Vorrichtung geleitet wird, von der die Webinhaltsanforderung gestellt wird.

15. Computerlesbares Medium nach Anspruch 11, bei dem das computerlesbare Medium durch Anweisungen gekennzeichnet ist, die bei einer Ausführung durch mindestens einen Datenprozessor der Netzwerkvorrichtung bewirken, dass der mindestens eine Datenprozessor Folgendes ausführt:
Extrahieren mindestens einer Internetprotokoll-, IP-, Adresse, die der DNS-Aufzeichnung entspricht, aus einem oder mehreren Datenpaketen, die der DNS-Antwort zugeordnet sind.

## Revendications

1. Procédé (300, 500) d'augmentation d'un rapport de flux de trafic de réseau avec des informations de service de nom de domaine, DNS, faisant intervenir un dispositif de mise en réseau comportant au moins un processeur de données, le procédé étant **caractérisé par** :
en réponse à une question associée à une demande de contenu Web, la réception, par l'au moins un processeur de données, d'une réponse DNS par l'intermédiaire d'un réseau, dans lequel la question est générée lorsque le contenu Web est demandé ;
l'extraction (310, 508), par l'au moins un processeur de données et à partir de la réponse DNS, d'au moins un nom de domaine et d'une clé qui correspond à la demande de contenu Web ;
le stockage (312, 512), par l'au moins un processeur de données, d'un enregistrement DNS incluant le nom de domaine et la clé dans une mémoire cache DNS ; et
l'inclusion (316), par l'au moins un processeur de données, de l'enregistrement DNS dans le rapport de flux de trafic de réseau.

2. Procédé selon la revendication 1, dans lequel la mémoire cache DNS inclut une mémoire cache priorisée, et dans lequel l'enregistrement DNS stocké dans la mémoire cache DNS a la priorité sur d'autres informations DNS contradictoires stockées dans la mémoire cache DNS.

3. Procédé selon la revendication 1, dans lequel la clé inclut au moins l'un d'un enregistrement 'A', 'AAA' ou d'un nom canonique, CNAME.

4. Procédé selon la revendication 1, comprenant en outre :
l'extraction d'au moins une adresse de protocole Internet, IP, correspondant à l'au moins un enregistrement DNS à partir d'un ou plusieurs paquets de données associés à la réponse DNS.

5. Procédé selon la revendication 1, dans lequel la réception, l'extraction et l'ajout sont mis en œuvre en tant qu'extension d'un système de capture de flux de trafic de réseau.

6. Dispositif de mise en réseau configuré pour augmenter un rapport de flux de trafic de réseau avec des informations de service de nom de domaine, DNS, **caractérisé par** :
une interface de communication configurée pour acheminer des données vers et depuis au moins un dispositif client ; et
au moins un processeur de données configuré pour :
en réponse à une question associée à une demande de contenu Web, recevoir une réponse DNS par l'intermédiaire d'un réseau, dans lequel la question est générée lorsque le contenu Web est demandé ;
extraire (310, 508) au moins un nom de domaine et une clé à partir de la réponse DNS qui correspond à la demande de contenu Web ;
stocker (312, 512), au moyen de l'au moins un processeur de données, un enregistrement DNS incluant le nom de domaine et la clé dans une mémoire cache DNS ; et
inclure (316) l'enregistrement DNS dans le rapport de flux de trafic de réseau.

7. Dispositif de mise en réseau selon la revendication 6, dans lequel la mémoire cache DNS inclut la mémoire cache priorisée, et dans lequel l'enregistrement DNS stocké dans la mémoire cache DNS est prioritaire sur d'autres informations DNS contradictoires stockées dans la mémoire cache DNS.

8. Dispositif de mise en réseau selon la revendication 6, dans lequel la clé inclut au moins l'un d'un enregistrement « A », « AAA » ou d'un nom canonique CNAME.

9. Dispositif de mise en réseau selon la revendication 6, dans lequel l'au moins un processeur de données est configuré pour extraire au moins une adresse de protocole Internet, IP, correspondant à l'enregistrement DNS à partir d'un ou plusieurs paquets de données associés à la réponse DNS.

10. Dispositif de mise en réseau selon la revendication 6, dans lequel l'au moins un processeur de données est configuré en outre pour réaliser la réception, l'extraction et le stockage en tant qu'extension d'un système de capture de flux de trafic de réseau.

11. Support lisible par ordinateur non transitoire d'augmentation de données de flux de trafic de réseau avec des informations de service de nom de domaine, DNS, le support lisible par ordinateur étant **caractérisé par** des instructions qui, lorsqu'elles sont exécutées par au moins un processeur de données d'un dispositif de mise en réseau, amènent l'au moins un processeur à :
en réponse à une question associée à une demande de contenu Web, recevoir une réponse DNS par l'intermédiaire d'un réseau, dans lequel la question est générée lorsque le contenu Web est demandé ;
extraire (310, 508) au moins un nom de domaine et une clé à partir de la réponse DNS qui correspond à la demande de contenu Web ;
stocker (312, 512) un enregistrement DNS incluant le nom de domaine et la clé dans une mémoire cache DNS ; et
insérer (316) l'enregistrement DNS dans le rapport de flux de trafic de réseau.

12. Support lisible par ordinateur selon la revendication 11, dans lequel la mémoire cache DNS inclut la mémoire cache priorisée, et dans lequel l'enregistrement DNS stocké dans la mémoire cache DNS est prioritaire sur d'autres informations DNS contradictoires stockées dans la mémoire cache DNS.

13. Support lisible par ordinateur selon la revendication 11, dans lequel la clé inclut au moins l'un d'un enregistrement « A », « AAA » ou d'un nom canonique CNAME.

14. Support lisible par ordinateur selon la revendication 11, dans lequel la réponse DNS est destinée à un dispositif client à partir duquel la demande de contenu Web est soumise.

15. Support lisible par ordinateur selon la revendication 11, dans lequel le support lisible par ordinateur est **caractérisé par** des instructions qui, lorsqu'elles sont exécutées par au moins un processeur de données du dispositif de mise en réseau, amènent l'au moins un processeur de données à :
extraire au moins une adresse de protocole Internet, IP, correspondant à l'enregistrement DNS à partir d'un ou plusieurs paquets de données associés à la réponse DNS.
